# FASCICULE DE BREVET EUROPEEN

(11) **EP 4 594 182 B1**
(45) Date de publication et mention de la délivrance du brevet: **02.09.2026**
(21) Numéro de dépôt: 23776962.5
(22) Date de dépôt: 26.09.2023
(51) Int. Cl.: B64C 25/40

(54) **PROCEDE DE ROULAGE AU SOL D'UN AERONEF COMPRENANT UN ORGANE MOTEUR EQUIPANT UNE ROUE PORTEE PAR UN ATTERRISSEUR DE L'AERONEF**
FLUGZEUG TAXI VERFAHREN MIT EINEM, MIT EINER ANTRIEBSEINHEIT AUSGESTATTETEM, FAHRWERKSRAD
METHOD FOR AIRCRAFT TAXIING, COMPRISING A WHEEL OF A LANDING GEAR EQUIPPED WITH A WHEEL POWERING DEVICE

(30) Priorité: 26.09.2022 FR 2209719
(43) Date de publication de la demande: 06.08.2025
(73) Titulaire: Safran Landing Systems, 78140 Vélizy-Villacoublay (FR)
(72) Inventeur: ONFROY, Dominique, 77550 MOISSY-CRAMAYEL (FR); JOIGNET, Jean-Philippe, 77550 MOISSY-CRAMAYEL (FR); VASLIN, Jean-Philippe, 77550 MOISSY-CRAMAYEL (FR)
(74) Mandataire: Cabinet Boettcher
(86) Numéro de dépôt international: PCT/EP2023/076447
(87) Numéro de publication internationale: WO 2024/083452

(56) Documents cités:
- DE-A1- 102012 022 288
- US-A1- 2012 168 557
- US-B2- 9 567 100

## Description

La présente invention concerne le déplacement au sol **d'un** aéronef, et plus particulièrement un procédé pour déterminer une capacité d'un organe moteur à déplacer l'aéronef au sol, l'organe moteur équipant une roue portée par un atterrisseur de l'aéronef.

### ARRIERE PLAN DE L'INVENTION

Traditionnellement, un avion est déplacé au sol en utilisant sa motorisation principale (moteurs à hélice ou réacteurs). Pour diminuer les atteintes environnementales liées à l'utilisation des aéronefs, il est prévu d'équiper lesdits aéronefs d'un dispositif d'entraînement en rotation des roues d'atterrisseur afin de permettre le déplacement au sol des aéronefs sans utiliser leur motorisation principale. Le dispositif d'entraînement comprend un organe moteur associé à au moins une roue d'un des atterrisseurs et des moyens d'accouplement destinés à sélectivement accoupler et désaccoupler un arbre de sortie du moteur à une jante de la roue. L'arbre et la jante sont accouplés lors des phases de roulage au sol, et désaccouplés lors des phases de décollage, d'atterrissage et lorsque l'aéronef est en vol. L'organe moteur comporte un moteur électrique et est relié à un générateur électrique entraîné par une motorisation auxiliaire (ou APU) de l'aéronef, et /ou à des batteries.

Un tel dispositif d'entraînement permet de diminuer la consommation de carburant pour le déplacement au sol de l'appareil. Il s'ensuit des gains économiques, une diminution notable des émissions de dioxyde de carbone (CO₂), d'oxyde d'azote (Noₓ) et de particules fines, ainsi qu'une diminution du bruit dans les zones aéroportuaires.

Le dispositif d'entraînement est généralement dimensionné pour déplacer l'aéronef à une vitesse maximale de 20 Knots avec une masse sensiblement égale à la masse maximale autorisée de l'aéronef au décollage, et cela quels que soient le type et les caractéristiques du sol (concernant le matériau comme le bitume, l'asphalte, le macadam, le béton ; et la surface comme l'inclinaison, la présence de bosses ou autres irrégularités ...) ou bien encore la durée de stationnement ou d'immobilisation de l'aéronef.

Un tel dispositif d'entraînement s'avère volumineux et particulièrement lourd (masse de l'ordre de plusieurs centaines de kilogrammes), ce qui peut grever la charge utile de l'aéronef et annuler les gains économiques et écologiques générés par le dispositif d'entraînement (surconsommation de carburant en dehors des phases de roulage au sol).

Un système d'assistance au pilote pour le roulage au sol d'un aéronef est connu à partir du document US 9,567,100 B2. Celui-ci établit une prévision de la performance du système de roulage électrique au sol.

### OBJET DE L'INVENTION

L'invention a pour but de proposer un moyen pour optimiser le roulage au sol des aéronefs.

### RESUME DE L'INVENTION

Il est envisagé de dimensionner le dispositif d'entraînement de manière à couvrir une majorité de cas opérationnels et non la totalité, de sorte que les conditions de faible probabilité qui amèneraient un surdimensionnement du dispositif d'entraînement ne seraient pas prises en compte. Dans ce cas, il est intéressant d'anticiper une incapacité du dispositif d'entraînement à couvrir ces conditions de faible probabilité et donc un besoin de moyens alternatifs pour assurer le déplacement de l'aéronef au sol (véhicule tracteur d'assistance au déplacement, motorisation principale de l'aéronef...) de façon à ne pas perturber l'opération de l'aéronef et l'organisation des zones aéroportuaires. En effet, un véhicule tracteur n'est pas nécessairement disponible à proximité de l'aéronef, de même que la reconfiguration par le pilote d'un déplacement assuré par le dispositif d'entraînement en un déplacement assuré par sa motorisation principale ne sera pas immédiate du fait du temps d'allumage nécessaire pour obtenir une poussée suffisante.

A cet effet, l'invention propose un procédé de roulage au sol des aéronefs en anticipant une incapacité d'un organe moteur équipant au moins une roue portée par un atterrisseur d'un aéronef à déplacer l'aéronef au sol. Le procédé comprend les étapes suivantes :
a) déterminer au moins l'une des valeurs suivantes : un effort minimum de traction à développer par l'organe moteur pour déplacer l'aéronef, un effort maximum de traction transmissible au sol par adhérence via la roue, et un échauffement de l'organe moteur ;
b) comparer chaque valeur à un seuil prédéterminé ;
c) déduire de cette comparaison une capacité de l'organe moteur à déplacer l'aéronef.

En ayant la possibilité d'anticiper une incapacité de l'organe moteur à déplacer l'aéronef (en situation de roulage continu ou en situation de démarrage depuis une position arrêtée), il est possible de prévoir un véhicule tracteur ou l'utilisation de la motorisation principale pour assister le roulage au sol de l'aéronef.

De manière particulière, l'organe moteur est dimensionné de manière à être en capacité de déplacer l'aéronef uniquement dans une majorité de cas opérationnels et non la totalité, ce qui permet de réduire sa masse et dans une moindre mesure son volume.

Selon une caractéristique particulière de l'invention, l'effort de traction minimum requis est déterminé à partir d'au moins l'un des paramètres suivants : la masse de l'aéronef, le type de sol, l'inclinaison du sol, la température ambiante et la durée d'immobilisation de l'aéronef.

De manière particulière, l'effort de traction minimum requis est déterminé à partir d'abaques ou d'équations reliant la masse de l'aéronef et l'inclinaison du sol à l'effort de traction minimum requis en fonction du type de sol, de la température ambiante et de la durée d'immobilisation de l'aéronef.

Selon une autre caractéristique particulière de l'invention, l'effort de traction maximum transmissible par adhérence est déterminé à partir d'au moins l'un des paramètres suivants : une charge exercée par la masse de l'aéronef sur la roue motrice, de conditions de sol.

De manière particulière, l'effort de traction maximum transmissible est déterminé à partir d'abaques ou d'équations reliant la charge exercée par la masse de l'aéronef sur la roue audit effort de traction maximum transmissible en fonction des conditions de sol.

Selon une autre caractéristique particulière de l'invention, l'échauffement de l'organe moteur est déterminé à partir de la température d'au moins un élément critique de l'organe moteur.

Selon une autre caractéristique particulière de l'invention, le seuil auquel est comparé l'effort de traction minimum requis correspond sensiblement au couple maximum délivrable par l'organe moteur.

Selon une autre caractéristique particulière de l'invention, le seuil auquel est comparé l'effort de traction maximum transmissible correspond sensiblement à l'effort de traction minimum requis.

De manière particulière, l'organe moteur comprend une pluralité d'actionneurs et le seuil auquel est comparé l'effort de traction minimum et/ou maximum est modifié en fonction du nombre d'actionneurs disponibles.

### BREVE DESCRIPTION DES DESSINS

L'invention sera mieux comprise à la lumière de la description qui suit, laquelle est purement illustrative et non limitative, et doit être lue en regard des dessins annexés, parmi lesquels :

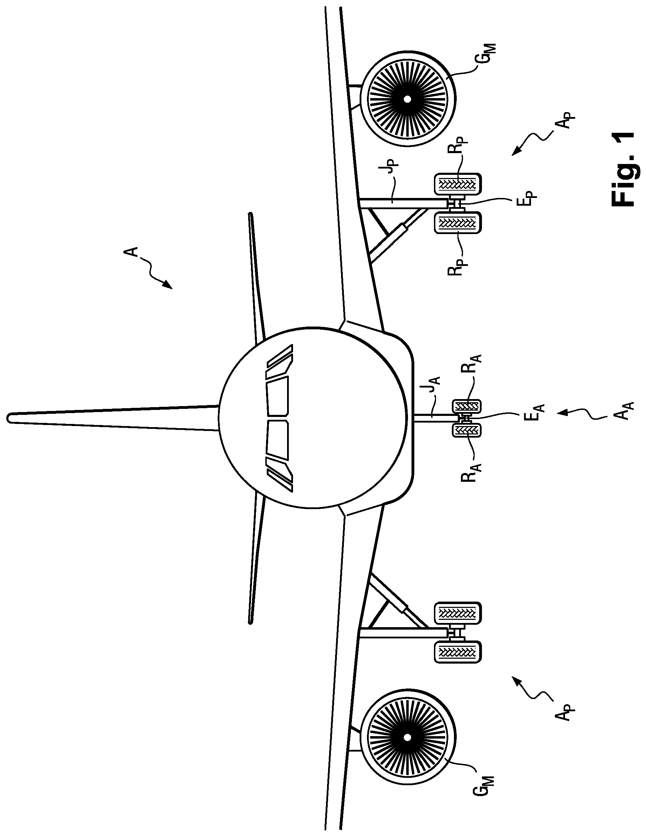

[Fig. 1] la figure 1 est une vue schématique d'un aéronef comprenant un atterrisseur auxiliaire portant des roues qui sont équipées d'un organe moteur de déplacement de l'aéronef au sol ;

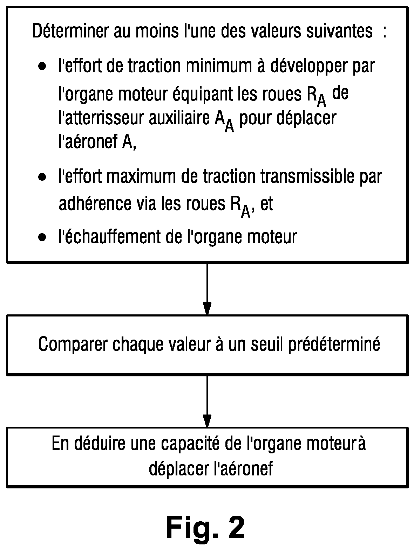

[Fig. 2] la figure 2 est une vue illustrant un procédé d'anticipation, selon l'invention, d'une incapacité de l'organe moteur à mouvoir l'aéronef au sol ;
[Fig. 3] la figure 3 est une vue illustrant des abaques utilisés pour déterminer, selon le procédé de l'invention, l'effort de traction minimum requis à développer par l'organe moteur pour mouvoir l'aéronef illustré à la figure 1 ; et
[Fig. 4] la figure 4 est une vue illustrant des abaques utilisés pour déterminer, selon le procédé de l'invention, un effort de traction maximum transmissible par les roues de l'atterrisseur auxiliaire de l'aéronef illustré à la figure 1.

### DESCRIPTION DETAILLEE DE L'INVENTION

En référence à la figue 1, un aéronef A comprend une motorisation principale (des groupes motopropulseurs G_{M} tels que : des moteurs à hélice comme des turbopropulseurs ; ou des turboréacteurs), deux atterrisseurs principaux A_{P} et un atterrisseur auxiliaire A_{A}.

Chacun des atterrisseurs principaux A_{P} comprend une jambe J_{P} ayant une première extrémité solidaire d'une structure S de l'aéronef A et, à l'opposé, une deuxième extrémité portant deux roues R_{P} reçues à pivotement sur un essieu E_{P}. Chacune des roues R_{P} comprend une jante recevant un pneumatique. La jambe J_{P} comprend un caisson articulé sur la structure de l'aéronef A, et une tige montée à coulissement selon un axe sensiblement perpendiculaire à l'axe de pivotement des roues R_{P} pour former un amortisseur. La tige porte à une extrémité inférieure l'essieu E_{P} recevant à pivotement les roues R_{P}. L'essieu E_{P} est solidaire de la tige de sorte que ledit essieu E_{P} est immobile vis-à-vis de ladite tige.

Par ailleurs, chacune des roues R_{P} est équipée d'un frein. De façon connue en soi, le frein comporte une pile de disques qui est reçue dans un espace annulaire délimité par la jante et qui comporte, en alternance, des disques stators fixes en rotation par rapport à l'essieu E_{P}, et des disques rotors fixes en rotation par rapport à la jante. Des vérins hydrauliques ou électromécaniques sont agencés pour exercer un effort de presse sur la pile de disques.

De manière similaire, l'atterrisseur auxiliaire A_{A} comprend une jambe J_{A} ayant une première extrémité solidaire de la structure S de l'aéronef A et, à l'opposé, une deuxième extrémité portant deux roues R_{A} reçues à pivotement sur un essieu E_{A}. Chacune des roues R_{A} comporte une jante recevant un pneumatique. La jambe J_{A} comprend un caisson articulé sur la structure de l'aéronef A, et une tige montée à coulissement selon un axe sensiblement perpendiculaire à l'axe de pivotement des roues R_{A} pour former un amortisseur. La tige porte à une extrémité inférieure l'essieu E_{A} recevant à pivotement les roues R_{A}. L'essieu E_{A} est solidaire de la tige de sorte que ledit essieu E_{A} est immobile vis-à-vis de ladite tige.

L'essieu E_{A} est équipé d'un dispositif d'entraînement en rotation des roues R_{A} destiné à déplacer l'aéronef A lorsque celui-ci est au sol (sans utiliser ses groupes motopropulseurs G_{M}). Le dispositif d'entraînement comprend un organe moteur comportant ici un moteur électrique combiné à un réducteur dont un arbre de sortie est sélectivement lié en rotation aux roues R_{A}. Le moteur électrique est alimenté par un réseau électrique relié à une unité de puissance auxiliaire, à savoir ici un générateur électrique entrainé en rotation par une motorisation auxiliaire (ou APU) de l'aéronef A.

Selon l'invention, l'organe moteur est dimensionné de manière à délivrer un couple maximum apte à assurer un effort de traction suffisant pour déplacer l'aéronef A dans une majorité de cas opérationnels, et non dans leur totalité. Les cas opérationnels à faible probabilité ne sont ici pas pris en compte dans le dimensionnement de l'organe moteur, ce qui permet d'éviter un surdimensionnement de l'organe moteur et donc d'en limiter la masse et dans une moindre mesure le volume. Les cas opérationnels à faible probabilité correspondent par exemple à une masse de l'aéronef A particulièrement élevée et/ou à des conditions de sols atypiques (pente très élevée, obstacle de taille importante sous la roue, rigidité de sol particulièrement faible...). Ils peuvent notamment être déterminés à partir d'une masse maximum prédéfinie pour une mission type ou par rapport à un objectif de masse (ou de volume) maximum pour permettre l'intégration de l'organe moteur à l'aéronef A.

L'effort de traction requis pour assurer le déplacement de l'aéronef A au sol est notamment fonction :
- de la masse de l'aéronef A;
- du type de sol (nature du revêtement du sol, présence d'obstacles, bosses...) ;
- de l'inclinaison du sol ;
- de la durée d'immobilisation (ou de stationnement) de l'aéronef A ; et
- de la température ambiante (qui influe sur la température du sol) et de la température des pneumatiques des roues R_{A}, R_{P}.

L'effort de traction requis est également fonction de la charge exercée sur les roues R_{A}, R_{P}, ladite charge étant elle-même notamment fonction de la masse de l'aéronef A et de l'inclinaison du sol.

Lorsque l'aéronef A est au sol, sa masse peut être déterminée via un système délivrant, pour chacun des atterrisseurs A_{A}, A_{P}, un signal représentatif **d'un** enfoncement de la tige dans le caisson, le système étant relié à une unité de traitement embarquée. Elle peut aussi être directement renseignée par le pilote de l'aéronef A ou par le personnel au sol via une interface homme-machine (IHM) reliée à l'unité de traitement par exemple via une liaison radioélectrique. Elle peut également être estimée, de façon anticipée, à partir de renseignements fournis par le pilote de l'aéronef A ou par le personnel au sol via l'interface homme-machine (masse au départ du vol, temps ou distance de vol, type de vol...), ces renseignements permettant à l'unité de traitement de déterminer une consommation en carburant des groupes motopropulseurs G_{M} (autrement dit une réduction de masse en vol) et d'en déduire une masse de l'aéronef A après atterrissage. Dans une implémentation simple, l'interface homme-machine comprend un terminal s'interfaçant avec le pilote dans le cockpit de l'aéronef A. Dans une implémentation plus évoluée, l'interface homme-machine comprend deux terminaux : l'un s'interfaçant avec le pilote dans le cockpit, l'autre s'interfaçant avec le personnel au sol via un outil dédié. Le personnel au sol peut alors être chargé de la gestion d'un véhicule tracteur apte à déplacer l'aéronef A le cas échéant.

Le type de sol peut être déterminé via un système embarqué, par exemple de type optique pointant vers le sol, le système étant relié à l'unité de traitement. Il peut aussi être directement renseigné par le pilote de l'aéronef A ou le personnel au sol via l'interface homme-machine. Une alternative consiste à utiliser une carte du sol de l'aéroport concerné répertoriant les différents types de sol, et des coordonnées représentatives d'un positionnement de l'aéronef A sur la carte.

L'inclinaison du sol peut être déterminée via un système embarqué mesurant l'assiette de l'aéronef A et, pour chacun des atterrisseurs A_{A}, A_{P}, l'enfoncement de la tige dans le caisson, le système embarqué étant relié à l'unité de traitement. Il peut aussi être directement renseigné par le pilote de l'aéronef A ou le personnel au sol via l'interface homme-machine. En cas d'indisponibilité de ces données (par exemple en cas d'absence ou de défaillance du système embarqué), l'unité de traitement peut utiliser une valeur d'inclinaison par défaut. Une alternative consiste à utiliser une carte de l'inclinaison du sol pour l'aéroport concerné, des coordonnées représentatives d'un positionnement de l'aéronef A sur la carte, et d'une information représentative d'une orientation de l'aéronef A.

La durée d'immobilisation peut être déterminée par l'unité de traitement à partir de données représentatives de la vitesse de l'aéronef A ou de l'activation des freins de l'aéronef A. En cas d'indisponibilité de ces données (par exemple lors d'une mise hors tension de l'aéronef A pendant un arrêt long), elle peut être renseignée par le pilote de l'aéronef A ou par le personnel au sol via l'interface homme-machine (par exemple en indiquant un départ de l'aéronef A après un arrêt long). L'unité de traitement peut aussi utiliser une durée d'immobilisation par défaut.

La température ambiante et la température des pneumatiques peuvent être déterminée via un système dédié embarqué, le système étant relié à l'unité de traitement. La température ambiante peut aussi être fournie à l'unité de traitement par un service externe à l'aéronef A informant des conditions météorologiques.

A partir d'au moins une de ces informations (masse de l'aéronef A, type de sol, inclinaison du sol, durée d'immobilisation de l'aéronef, température ambiante), l'unité de traitement détermine l'effort de traction minimum requis 101 pour déplacer l'aéronef A au sol et le compare à un seuil prédéterminé 102 correspondant au couple maximum délivrable par l'organe moteur. Dans le cas où l'effort de traction minimum requis 101 est inférieur ou égal au seuil prédéterminé 102, l'unité de traitement indique via l'interface homme-machine une capacité du dispositif d'entraînement à déplacer l'aéronef A au sol. Dans le cas contraire, autrement dit lorsque l'effort de traction minimum requis 101 est supérieur au seuil prédéterminé 102, l'unité de traitement indique via l'interface homme-machine une incapacité du dispositif d'entraînement à déplacer l'aéronef A au sol, ce qui permet au pilote ou au personnel au sol de faire appel à des moyens de substitution pour mouvoir ledit aéronef A (utilisation d'un véhicule tracteur pour les phases de manœuvre ou des groupes motopropulseurs G_{M} pour les phases de taxiage).

La détermination de l'effort de traction minimum requis 101 peut être réalisée à partir d'abaques ou d'équations prédéfinis (ou de modèles plus évolués) et mémorisés par l'unité de traitement.

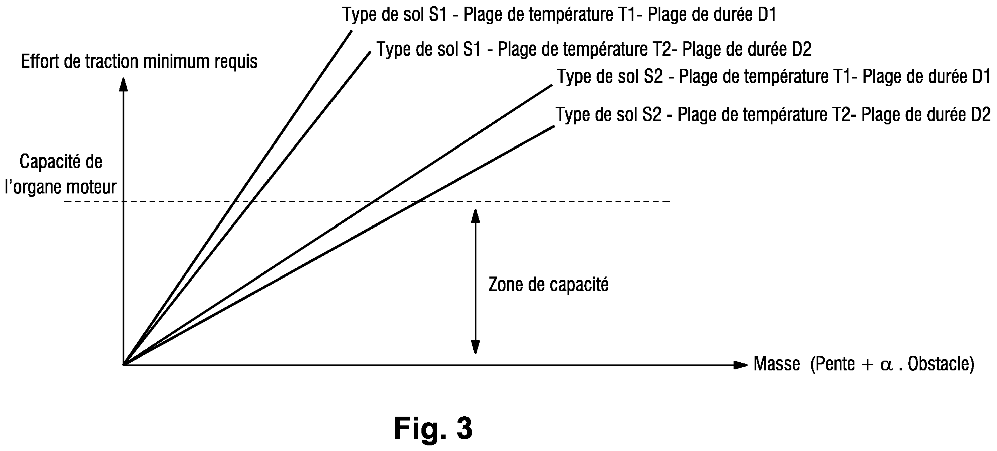

La figure 3 illustre un exemple d'abaques utilisés par l'unité de traitement pour déterminer l'effort de traction minimum requis 101. Cet exemple relie, pour une inclinaison (ou pente) du sol et un obstacle donnés, la masse de l'aéronef A à l'effort de traction minimum requis 101 en fonction du type de revêtement au sol, de la température ambiante et de la durée d'immobilisation de l'aéronef A. Dans cet exemple, la référence α est un coefficient fonction d'une hauteur de l'obstacle, et il existe :
- deux types de revêtement : un premier type S₁ correspondant à un sol flexible (par exemple en asphalte), un deuxième type S₂ correspondant à un sol rigide (par exemple en béton) ;
- deux plages de températures : une première plage T₁ correspondant à une température supérieure ou égale à 30 degrés Celsius, et une deuxième plage T₂ correspondant à une température inférieure à 30 degrés Celsius ;
- deux plages de durée d'immobilisation de l'aéronef A : une première plage D₁ correspondant à une durée supérieure ou égale à une heure, et une deuxième plage D₂ correspondant à une durée inférieure à une heure.

Bien entendu, le nombre d'abaques peut être augmenté, en prenant par exemple en compte d'autres paramètres (pression et usure des pneumatiques...) ou bien en augmentant le nombre de types de revêtement et/ ou le nombre de plages de température et/ou le nombre de plages de durée d'immobilisation.

Les équations relient l'effort de traction minimum requis 101 à la masse de l'aéronef A, au type de sol, à l'inclinaison (ou pente) du sol, à la durée d'immobilisation de l'aéronef A et à la température ambiante. Par exemple, l'effort de traction minimum requis 101 est déterminé à partir de l'une des deux équations suivantes : $\begin{matrix}Effort de traction minimum requis 101 = \\ \left(β+pente+δ.obstacle\right) \times Masse\end{matrix}$ $\begin{matrix}Effort de traction minimum requis 101 = \\ \left(β+pente\right) \times Masse + δ ′ . obstacle\end{matrix}$ avec :
- β fonction de la température, de la durée d'immobilisation de l'aéronef A, et du type de revêtement de sol ; et
- δ, δ' fonction de la hauteur de l'obstacle ou valeur booléenne indiquant la présence ou non de l'obstacle.

L'utilisation d'équations et non d'abaques permet l'utilisation de paramètres continus et non discrétisés : pour la durée d'immobilisation de l'aéronef A, la pente de l'abaque est par exemple calculée par une fonction continue de la durée d'immobilisation de l'aéronef A au lieu d'utiliser deux abaques de pentes différentes correspondant à deux plages de durée d'immobilisation.

Indépendamment des caractéristiques intrinsèques de l'organe moteur, les conditions d'adhérence peuvent être un facteur limitant l'effort de traction maximum 201 transmissible par les roues R_{A} de l'atterrisseur auxiliaire A_{A}. L'effort de traction maximum transmissible 201 est notamment fonction :
- du chargement de l'atterrisseur auxiliaire A_{A} (l'effort de traction transmissible est directement proportionnel au poids exercé sur les roues R_{A} motrices) ; et
- des conditions de sol (sec, mouillé, enneigé, pollué par un déverglaçant, une huile...) .

Lorsque l'aéronef A est au sol, le chargement de l'atterrisseur auxiliaire A_{A} peut être déterminé par l'unité de traitement via le système délivrant le signal représentatif de l'enfoncement de la tige dans le caisson. Il peut aussi être directement renseigné par le pilote de l'aéronef A ou par le personnel au sol via l'interface homme-machine.

Les conditions de sol peuvent être déterminées par l'unité de traitement via le système optique pointant vers le sol. Elles peuvent aussi être fournies à l'unité de traitement par un service externe à l'aéronef A informant des conditions météorologiques.

A partir de ces informations (chargement de l'atterrisseur auxiliaire A_{A} et conditions de sol), l'unité de traitement détermine l'effort de traction maximum transmissible 201 via les roues R_{A} de l'atterrisseur auxiliaire A_{A} et le compare à un seuil prédéterminé 202 correspondant ici à l'effort de traction minimum requis 101 pour déplacer l'aéronef A. Dans le cas où l'effort de traction maximum transmissible 201 est supérieur ou égal au seuil prédéterminé 202, l'unité de traitement indique via l'interface homme-machine une capacité du dispositif d'entraînement à déplacer l'aéronef A au sol. Dans le cas contraire, autrement dit lorsque l'effort de traction maximum transmissible 201 est inférieur au seuil prédéterminé 202, l'unité de traitement indique via l'interface homme-machine l'incapacité du dispositif d'entraînement à déplacer l'aéronef A au sol, ce qui permet au pilote ou au personnel au sol de faire appel à des moyens de substitution pour mouvoir ledit aéronef A (utilisation d'un véhicule tracteur pour les phases de manœuvre ou des groupes motopropulseurs pour les phases de taxiage).

La détermination de l'effort de traction maximum transmissible 201 peut être réalisée à partir d'abaques ou d'équations prédéfinies et mémorisées par l'unité de traitement.

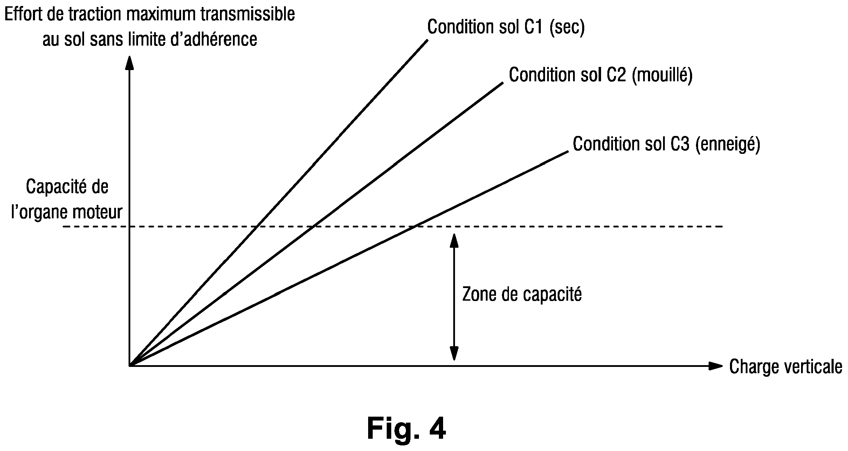

La figure 4 illustre un exemple d'abaques utilisés par l'unité de traitement pour déterminer l'effort de traction maximum transmissible 201. Cet exemple relie le chargement de l'atterrisseur auxiliaire A_{A} à l'effort de traction maximum transmissible 201 en fonction des conditions de sol. Dans cet exemple, il existe trois conditions de sol différentes :
- une première condition de sol C₁ correspondant à un sol sec ;
- une deuxième condition de sol C₂ correspondant à un sol mouillé ; et
- une troisième condition de sol C₃ correspondant à un sol enneigé.

Bien entendu, le nombre d'abaques peut être augmenté en prenant par exemple en compte d'autres paramètres (pression et usure des pneus...) ou bien en augmentant le nombre de conditions de sol (verglacé, pollué par un déverglaçant, par une huile...) .

Selon l'invention, l'organe moteur est également dimensionné de manière à supporter en fonctionnement un échauffement maximum permettant de déplacer l'aéronef A dans la majorité des cas opérationnels, et non dans leur totalité. Les cas opérationnels à faible probabilité ne sont ici pas pris en compte dans le dimensionnement de l'organe moteur, en particulier les cas opérationnels nécessitant un fonctionnement à forte puissance pendant une très longue période, ce qui permet d'éviter un surdimensionnement de l'organe moteur et donc d'en limiter la masse.

Lorsque le moteur est en fonctionnement, l'unité de traitement détermine, via des capteurs de température ou en fonction de paramètres de contrôle de l'organe moteur (par exemple le courant d'alimentation du moteur), l'échauffement 301 de différents éléments critiques de l'organe moteur (moteur, électronique, harnais...) et le compare, pour chaque élément critique, à un premier seuil TC₁ et à un deuxième seuil TC₂ prédéterminés. Le premier seuil TC₁ correspond à l'échauffement maximum admissible par l'élément critique considéré réduit d'une première marge m₁, et le deuxième seuil TC₂ correspond à l'échauffement maximum admissible par l'élément critique considéré réduit d'une deuxième marge m₂. La première marge m₁ est supérieure à la deuxième marge m₂ de sorte que le deuxième seuil TC₂ est supérieur au premier seuil TC₁.

Lorsque la température d'au moins l'un des éléments critiques atteint le premier seuil TC₁ associé, l'unité de traitement indique au pilote, via l'interface homme-machine, que l'organe moteur a une capacité d'échauffement résiduelle limitée et donc une capacité de fonctionnement limitée à une durée permise par la première marge m₁, ce qui permet au pilote de faire appel à des moyens de substitution pour continuer à mouvoir ledit aéronef A après la durée permise par ladite première marge m₁ (utilisation d'un véhicule tracteur, notamment pour les phases de manœuvre, et/ou des groupes motopropulseurs G_{M}, notamment pour les phases de taxiage).

Lorsque la température de l'élément critique considéré a atteint le deuxième seuil TC₂, l'organe moteur est désactivé. Cette désactivation peut être automatique ou commandée par le pilote. Le besoin de l'utilisation des groupes motopropulseurs G_{M} peut également être basée sur la connaissance de la mission effectuée par l'aéronef A.

Des exemples mettant en œuvre de telles déterminations de l'incapacité de l'organe moteur à déplacer l'aéronef A vont maintenant être détaillés. Dans ces exemples, l'interface homme-machine indique au pilote l'incapacité de l'organe moteur sous forme d'un voyant pouvant adopter trois couleurs :
- Vert : organe moteur fonctionnel, pas de moyens de substitution à prévoir pour mouvoir l'aéronef A ;
- Jaune : organe moteur fonctionnel, moyens de substitution à prévoir à court terme pour mouvoir l'aéronef A ;
- Rouge : organe moteur indisponible, moyens de substitution indispensables.

### Exemple 1

Avant de quitter une porte d'embarquement, le pilote renseigne dans l'interface homme-machine la masse de l'aéronef A qui est ici moyenne. L'unité de traitement reçoit également les paramètres suivants de la part du personnel au sol via l'interface homme-machine : sol rigide de pente nulle (données connues de la porte d'embarquement), piste sèche sans obstacle sous les roues de l'appareil dans sa position de stationnement (contrôle visuel), et démarrage prévu après une immobilisation d'une heure.

L'unité de traitement détermine pour ces conditions que l'organe moteur est capable d'assurer la mise en mouvement de l'appareil. Cette information est indiquée au pilote et au personnel au sol via l'interface homme-machine qui affiche un voyant vert. Le pilote ou le personnel au sol ne font pas appel à un moyen de substitution (véhicule tracteur).

### Exemple 2

Avant le départ d'une porte d'embarquement, le pilote renseigne dans l'interface homme-machine la masse (constatée ou anticipée) de l'aéronef A qui est ici élevée. L'unité de traitement reçoit également les paramètres suivants de la part du personnel au sol via l'interface homme-machine : sol rigide de pente forte dans le sens de démarrage (données connues de la porte d'embarquement), sol sec sans obstacle sous les roues de l'appareil dans sa position de stationnement (contrôle visuel), et démarrage prévu après une immobilisation de douze heures.

L'unité de traitement détermine pour ces conditions que l'organe moteur n'est pas capable d'assurer la mise en mouvement de l'aéronef A. Cette information est indiquée au pilote et au personnel sol via l'interface homme-machine qui affiche un voyant rouge. Le personnel au sol fait appel à un moyen de substitution (véhicule tracteur) pour la mise en mouvement de l'appareil, sans attendre de constater ce besoin au moment du départ effectif. A noter qu'à partir des paramètres rentrés par le personnel au sol via l'interface homme-machine, l'unité de traitement peut déterminer la masse maximale pour laquelle il est possible de mettre l'aéronef A en mouvement via l'organe moteur et d'informer la pilote de cette limitation opérationnelle, ce qui lui permet de savoir quel niveau de marge il possède.

### Exemple 3

Lors du roulage de l'aéronef A sur un taxiway (piste servant à déplacer un aéronef d'un hangar ou d'une aérogare jusqu'à une piste de décollage), l'unité de traitement détermine, par exemple via le système délivrant des signaux représentatifs de l'enfoncement des tiges des atterrisseurs A_{A}, A_{P} dans leurs caissons, la charge exercée par la masse de l'aéronef A (qui est ici moyenne) sur les roues R_{A} motrices. L'unité de traitement reçoit également, de manière instantanée ou anticipée, les paramètres suivants issus de la carte du sol : sol flexible de pente nulle. Les conditions météorologiques sont également connues de l'unité de traitement grâce aux informations renseignées par le personnel au sol via l'interface homme-machine : temps sec (piste sèche).

L'unité de traitement détermine pour ces conditions que l'organe moteur est capable d'assurer la mise en mouvement de l'aéronef A en cas d'immobilisation de celui-ci pendant une courte durée (typiquement pour des arrêts dans une file d'attente avant décollage). Cette information est indiquée au pilote via l'interface homme-machine qui affiche un voyant vert. Le pilote sait alors qu'il n'a pas besoin d'anticiper l'incapacité de l'organe moteur en cas d'immobilisation de courte durée.

### Exemple 4

Lors du roulage de l'aéronef A sur un taxiway (piste servant à déplacer un aéronef d'un hangar ou d'une aérogare jusqu'à une piste de décollage), l'unité de traitement détermine, par exemple via le système délivrant un signal représentatif d'un enfoncement de la tige dans le caisson, la charge exercée par la masse de l'aéronef A (qui est ici élevée) sur les roues RA motrices. L'unité de traitement reçoit également, de manière instantanée ou anticipée, les paramètres suivants issus de la carte du sol : sol flexible de pente fortement ascendante. Les conditions météorologiques sont également connues de l'unité de traitement grâce aux informations renseignées par le personnel au sol via l'interface homme-machine : temps humide (piste humide).

L'unité de traitement détermine pour ces conditions que l'effort de traction maximum transmissible 201 est inférieur à l'effort de traction minimum requis 101 pour déplacer l'aéronef A, et que donc l'organe moteur n'est pas capable d'assurer la mise en mouvement de l'appareil en cas d'immobilisation de l'aéronef A pendant une courte durée. Cette information est indiquée au pilote via l'interface homme-machine qui affiche un voyant jaune. Le pilote sait alors que s'il existe un risque de devoir stopper l'aéronef A, il doit allumer au moins l'un de ses groupes motopropulseurs de façon à ne pas retarder la remise en mouvement de l'aéronef en cas d'arrêt.

### Exemple 5

Lors du roulage de l'aéronef sur un taxiway, l'unité de traitement détermine une température des éléments critiques de l'organe moteur.

L'unité de traitement informe le pilote, via l'interface homme-machine qui affiche un voyant jaune, que l'organe moteur connait un échauffement 301 sensiblement égal au premier seuil TC₁ prédéterminé. Le pilote sait alors qu'il doit allumer ses groupes motopropulseurs G_{M} s'il doit poursuivre le taxiage. Le dispositif d'entraînement continue à mouvoir l'aéronef pendant le temps de la mise en route du ou des groupes motopropulseurs, puis le pilote coupe le dispositif d'entraînement lorsque le ou les groupes motopropulseurs G_{M} sont capables de prendre le relai. S'il n'est pas coupé par le pilote, le dispositif d'entraînement se coupe automatiquement lorsque l'organe moteur connait un échauffement 301 sensiblement égal au deuxième seuil TC₂ prédéterminé. L'unité de traitement informe alors le pilote, via l'interface homme-machine qui affiche un voyant rouge, que l'organe moteur est incapable de mouvoir l'aéronef.

Bien entendu, l'invention n'est pas limitée aux modes de réalisation décrits mais englobe toute variante entrant dans le champ de l'invention telle que définie par les revendications.

Bien que le moteur soit ici un moteur électrique, il peut être d'autres types (hydraulique...).

Bien que le dispositif d'entraînement équipe ici l'atterrisseur auxiliaire A_{A}, il peut aussi équiper tout autre atterrisseur, comme par exemple les atterrisseurs principaux A_{P}.

L'organe moteur peut comprendre une pluralité d'actionneurs et le seuil auquel est comparé l'effort de traction minimum requis 101 et/ou maximum transmissible 201 est modifié en fonction du nombre d'actionneurs disponibles.

Bien que la capacité et l'incapacité de l'organe moteur à mouvoir l'aéronef A soient ici indiquées au pilote via un voyant de couleur, elles peuvent être indiquées par tout autre moyen, notamment via l'interface homme-machine. Le pilote peut aussi être informé, par exemple via l'interface homme-machine, des raisons pour lesquelles l'organe moteur est dans l'incapacité à mouvoir l'aéronef A (adhérence limitée, échauffement de l'organe moteur...), ce qui peut permettre au pilote de choisir la reconfiguration adéquate du déplacement dudit aéronef A.

L'unité de traitement peut enregistrer, pour chacun des aéroports utilisés par l'aéronef, les données renseignées par le pilote ou le personnel (inclinaison du sol, type du sol...) dans une base de données, de manière à pouvoir s'affranchir, au fur et à mesure des vols, des renseignements fournis par le pilote et/ou le personnel au sol. La base de données peut être partagée avec d'autres aéronefs.

## Revendications

1. Procédé de roulage au sol d'un aéronef, en anticipant une incapacité d'un organe moteur équipant au moins une roue (R_{A}) portée par un atterrisseur (A_{A}) de l'aéronef (A) à déplacer ledit aéronef au sol, le procédé comprenant les étapes suivantes :
a) déterminer au moins l'une des valeurs suivantes : un effort de traction minimum requis (101) par l'organe moteur pour déplacer l'aéronef, un effort de traction maximum transmissible (201) au sol par adhérence via la roue, et un échauffement (301) de l'organe moteur ;
b) comparer chaque valeur à un seuil prédéterminé (102, 202, TC₁ , TC₂) ;
c) déduire de la comparaison une capacité de l'organe moteur à déplacer l'aéronef.

2. Procédé selon la revendication 1, dans lequel l'organe moteur est dimensionné de manière à être en capacité de déplacer l'aéronef (A) uniquement dans une majorité de cas opérationnels.

3. Procédé selon la revendication 1 ou 2, dans lequel l'effort de traction minimum requis (101) est déterminé à partir d'au moins l'un des paramètres suivants : la masse de l'aéronef (A), le type de sol (S1, S2), l'inclinaison du sol, la température ambiante (T1, T2) et la durée d'immobilisation (D1, D2) de l'aéronef (A).

4. Procédé selon la revendication 3, dans lequel l'effort de traction minimum requis (101) est déterminé à partir d'abaques ou d'équations reliant la masse de l'aéronef (A) et l'inclinaison du sol à l'effort de traction minimum requis (101) en fonction du type de sol (S1, S2), de la température ambiante (T1, T2) et de la durée d'immobilisation (D1, D2) de l'aéronef (A).

5. Procédé selon la revendication 1 ou 2, dans lequel l'effort de traction maximum transmissible (201) par adhérence est déterminé à partir d'au moins l'un des paramètres suivants : une charge exercée par la masse de l'aéronef sur la roue (R_{A}), de conditions de sol (C1, C2, C3).

6. Procédé selon la revendication 5, dans lequel l'effort de traction maximum transmissible (201) est déterminé à partir d'abaques ou d'équations reliant la charge exercée par la masse de l'aéronef sur la roue (R_{A}) audit effort de traction maximum transmissible en fonction des conditions de sol (C1, C2, C3).

7. Procédé selon la revendication 1 ou 2, dans lequel l'échauffement (301) de l'organe moteur est déterminé à partir de la température d'au moins un élément critique de l'organe moteur.

8. Procédé selon la revendication 1 ou 2, dans lequel le seuil prédéterminé (102) auquel est comparé l'effort de traction minimum requis (101) correspond sensiblement au couple maximum délivrable par l'organe moteur.

9. Procédé selon la revendication 1 ou 2, dans lequel le seuil prédéterminé (202) auquel est comparé l'effort de traction maximum transmissible (201) correspond sensiblement à l'effort de traction minimum requis (101).

10. Procédé selon l'une quelconque des revendications précédentes, dans lequel l'organe moteur comprend une pluralité d'actionneurs et le seuil prédéterminé (102, 202) auquel est comparé l'effort de traction minimum requis (101) et/ou maximum transmissible (201) est modifié en fonction du nombre d'actionneurs disponibles.

## Patentansprüche

1. Verfahren zur Rollfeldbewegung eines Luftfahrzeugs, wobei eine Unfähigkeit eines Antriebsorgans, mit welchem mindestens ein Rad (R_{A}) versehen ist, das von einem Landefahrwerk (A_{A}) des Luftfahrzeugs (A) getragen wird, das Luftfahrzeug am Boden zu bewegen, antizipiert wird, wobei das Verfahren die folgenden Schritte umfasst:
a) Bestimmen mindestens eines der folgenden Werte: einer Mindestzugkraft (101), welche das Antriebsorgan benötigt, um das Luftfahrzeug zu bewegen, einer Höchstzugkraft (201), welche über das Rad durch Bodenhaftung übertragen werden kann, und einer Erwärmung (301) des Antriebsorgans;
b) Vergleichen jedes der Werte mit einem vorbestimmten Schwellenwert (102, 202, TC₁, TC₂);
c) Einschätzen, anhand dieses Vergleichs, ob das Antriebsorgan in der Lage ist, das Luftfahrzeug zu bewegen.

2. Verfahren nach Anspruch 1, wobei das Antriebsorgan derart ausgelegt ist, dass es in der Lage ist, das Luftfahrzeug (A) lediglich in einer überwiegenden Zahl der Betriebsfälle zu bewegen.

3. Verfahren nach Anspruch 1 oder 2, wobei die benötigte Mindestzugkraft (101) ausgehend von mindestens einem der folgenden Parameter bestimmt wird: der Masse des Luftfahrzeugs (A), der Art des Bodens (S1, S2), der Neigung des Bodens, der Umgebungstemperatur (T1, T2) und der Standzeitdauer (D1, D2) des Luftfahrzeugs (A).

4. Verfahren nach Anspruch 3, wobei die benötigte Mindestzugkraft (101) ausgehend von Diagrammen oder Gleichungen bestimmt wird, welche die Masse des Luftfahrzeugs (A) und die Neigung des Bodens in Abhängigkeit von der Art des Bodens (S1, S2), der Umgebungstemperatur (T1, T2) und der Standzeitdauer (D1, D2) des Luftfahrzeugs (A) mit der benötigten Mindestzugkraft (101) in Verbindung bringen.

5. Verfahren nach Anspruch 1 oder 2, wobei die durch Haftung übertragbare Höchstzugkraft (201) ausgehend von mindestens einem der folgenden Parameter bestimmt wird: einer Last, wie sie von der Masse des Luftfahrzeugs auf das Rad (R_{A}) ausgeübt wird, Bodenbedingungen (C1, C2, C3).

6. Verfahren nach Anspruch 5, wobei die übertragbare Höchstzugkraft (201) ausgehend von Diagrammen oder Gleichungen bestimmt wird, welche die Last, wie sie von der Masse des Luftfahrzeugs auf das Rad (R_{A}) ausgeübt wird, in Abhängigkeit von Bodenbedingungen (C1, C2, C3) mit der übertragbaren Höchstzugkraft in Verbindung bringen.

7. Verfahren nach Anspruch 1 oder 2, wobei die Erwärmung (301) des Antriebsorgans ausgehend von der Temperatur mindestens eines kritischen Elements des Antriebsorgans bestimmt wird.

8. Verfahren nach Anspruch 1 oder 2, wobei der vorbestimmte Schwellenwert (102), mit welchem die benötigte Mindestzugkraft (101) verglichen wird, im Wesentlichen dem maximalen Drehmoment entspricht, welches das Antriebsorgan bereitstellen kann.

9. Verfahren nach Anspruch 1 oder 2, wobei der vorbestimmte Schwellenwert (202), mit welchem die übertragbare Höchstzugkraft (201) verglichen wird, im Wesentlichen der benötigten Mindestzugkraft (101) entspricht.

10. Verfahren nach einem beliebigen der vorhergehenden Ansprüche, wobei das Antriebsorgan eine Mehrzahl an Aktoren umfasst und der vorbestimmte Schwellenwert (102, 202), mit welchem die benötigte Mindestzugkraft (101) und/oder übertragbare Höchstzugkraft (201) verglichen wird, in Abhängigkeit von der Anzahl an verfügbaren Aktoren modifiziert wird.

## Claims

1. A method for taxiing an aircraft by pre-empting when a drive member provided in at least one wheel (R_{A}) borne by a landing gear (A_{A}) of the aircraft (A) is unable to move said aircraft on the ground, the method comprising the following steps:
a) determining at least one of the following values: a minimum required traction force (101) needed by the drive member to move the aircraft, a maximum transmissible traction force (201) that can be transmitted to the ground by grip via the wheel, and heating (301) of the drive member;
b) comparing each value with a predetermined threshold (102, 202, TC₁, TC₂);
c) deducing from the comparison whether the drive member is able to move the aircraft.

2. The method according to claim 1, wherein the drive member is sized so as to be able to move the aircraft (A) only in a majority of operating scenarios.

3. The method according to claim 1 or 2, wherein the minimum required traction force (101) is determined from at least one of the following parameters: the mass of the aircraft (A), the type of ground (S1, S2), the slope of the ground, the ambient temperature (T1, T2) and the stop time (D1, D2) of the aircraft (A).

4. The method according to claim 3, wherein the minimum required traction force (101) is determined from charts or equations that relate the mass of the aircraft (A) and the slope of the ground to the minimum required traction force (101) depending on the type of ground (S1, S2), the ambient temperature (T1, T2) and the stop time (D1, D2) of the aircraft (A).

5. The method according to claim 1 or 2, wherein the maximum transmissible traction force (201) that can be transmitted by grip is determined from at least one of the following parameters: a load exerted by the mass of the aircraft on the wheel (R_{A}) , ground conditions (C1, C2, C3).

6. The method according to claim 5, wherein the maximum transmissible traction force (201) is determined from charts or equations that relate the load exerted by the mass of the aircraft on the wheel (R_{A}) to said maximum transmissible traction force depending on the ground conditions (C1, C2, C3).

7. The method according to claim 1 or 2, wherein the heating (301) of the drive member is determined from the temperature of at least one critical element of the drive member.

8. The method according to claim 1 or 2, wherein the predetermined threshold (102) with which the minimum required traction force (101) is compared corresponds substantially to the maximum torque deliverable by the drive member.

9. The method according to claim 1 or 2, wherein the predetermined threshold (202) with which the maximum transmissible traction force (201) is compared corresponds substantially to the minimum required traction force (101).

10. The method according to any of the preceding claims, wherein the drive member comprises a plurality of actuators, and the predetermined threshold (102, 202) with which the minimum required traction force (101) and/or the maximum transmissible traction force (201) is/are compared is adjusted depending on the number of available actuators.
